Europäisches Patentamt

(19) European Patent Office

Office européen des brevets

(11) Numéro de publication: **0 095 059**
**B1**

(12) FASCICULE DE BREVET EUROPÉEN

(45) Date de publication du fascicule du brevet:
**13.08.86**

(51) Int. Cl.⁴: **F 16 H 25/22**, F 16 B 39/34

(21) Numéro de dépôt: **83104317.9**

(22) Date de dépôt: **02.05.83**

(54) **Dispositif vis-écrou à roulement à réglage du jeu ou de la précharge interne.**

(30) Priorité: **05.05.82 FR 8207819**

(43) Date de publication de la demande:
**30.11.83 Bulletin 83/48**

(45) Mention de la délivrance du brevet:
**13.08.86 Bulletin 86/33**

(84) Etats contractants désignés:
**CH DE GB IT LI NL SE**

(56) Documents cité:
**GB-A-466 211**
**US-A-3 638 507**
**US-A-3 851 541**

(73) Titulaire: **SKF COMPAGNIE D'APPLICATIONS MECANIQUES ET CIE faisant commerce sous le nom commercial de TRANSROL Société en nom collectif:, Zone Industrielle de Bissy Chambery rue Félix Esclangon, F-73003 Chambery (FR)**

(72) Inventeur: **Druet, Clair Maurice, 2 chemin du Printemps, F-73100 Brison St. Innocent (FR)**
Inventeur: **Fillon, Marcel, 35 rue Emile Eudes, F-94140 Alfortville (FR)**

(74) Mandataire: **Casalonga, Axel, BUREAU D.A. CASALONGA OFFICE JOSSE & PETIT Morassistrasse 8, D-8000 München 5 (DE)**

## Description

La présente invention se rapporte à un dispositif vis-écrou à roulement du type comprenant un écrou divisé en deux tronçons d'écrou coaxiaux, juxtaposés, portant axialement 1, contre l'autre, et des moyens pour régler et immobiliser les deux tronçons d'écrous dans leur position angulaire réciproque, en vue du réglage du jeu ou de la précharge interne. Un tel dispositif est connu, par exemple, par le brevet US-A-3.851.541.

Les dispositifs vis-écrous à roulement, qu'ils soient à circulation de billes, à circulation de rouleaux ou à rouleaux satellites, sont utilisés pour transformer des mouvements de rotation en mouvement de translation pour le réglage du jeu ou de la précharge interne de l'écrou, il est connu de diviser l'écrou en deux tronçons d'écrou et de prévoir des moyens pour régler et immobiliser les deux tronçons d'écrou dans leur position reciproque, soit axiale, soit angulaire.

Dans le premier cas, il est par exemple possible d'intercaler entre les faces frontales opposées rectifiées des deux tronçons d'écrou, immobilisés dans leur position angulaire réciproque, une bague formant cale-entretoise d'épaisseur déterminée pour modifier le réglage, il est alors nécessaire de dévisser un tronçon d'écrou de la vis pour pouvoir démonter et ajuster la bague intermédiaire ou la remplacer par une bague d'épaisseur différente. Il est également possible d'immobiliser les deux tronçons d'écrou angulairement dans un carter extérieur, en laissant subsister un intervalle axial entre eux, et de serrer les deux tronçons d'écrou l'un en direction de l'autre par un écrou de serrage vissé sur l'un des tronçons d'écrou et portant axialement contre le carter extérieur qui porte à son tour contre une butée solidaire de l'autre tronçon d'écrou. Le principal inconvénient de ce type d'écrou réglable réside dans son diamètre extérieur important, du fait de la presence du carter extérieur.

Dans le deuxième cas, de nombreuses solutions ont été proposées pour permettre un réglage et une immobilisation des deux tronçons d'écrou dans leur position angulaire relative.

Ce réglage et cette immobilisation peuvent se faire, par exemple suivant la demande de brevet allemand n° 2 135 812, à l'aide d'une vis tangente entre deux parties concentriques des deux tronçons d'écrou, ou entre deux bagues concentriques fixées aux deux tronçons d'écrou. L'usinage des dentures que les deux tronçons d'écrou ou les deux bagues rapportées doivent présenter en vue de leur prise avec la vis tangente entraîne une très forte augmentation du prix de revient de l'écrou. De plus, cette vis tangente conduit à un encombrement relatîvement important dans le sens radial.

Selon le brevet britannique n° 1.140.381, les deux tronçons d'écrou entourés par un carter sont crantés extérieurement pour coopérer avec une bague crantée intérieure. Ces crans étant axiaux, il est nécessaire, pour pouvoir dégager les crans des tronçons d'écrou des crans de la bague intermédiaire et les réengager ensuite sur les crans de la baque intermédiaire dans une autre position angulaire réciproque, de devisser l'écrou complètement de la vis. De plus, ce réglage par crans n'est pas "sensitif" et ce n'est qu'après avoir revissé l'écrou sur la vis qu'il est possible de déterminer si le réglage angulaire effectué a été correct.

Les mêmes inconvénients se retrouvent sur l'écrou suivant le brevet D.S. n° 2.933.941 dont les deux tronçons d'écrou entourés par un carter sont immobilisés dans leur position angulaire réciproque à l'aide de crans axiaux extérieurs coopérant avec des crans axiaux intérieurs du carter extérieur.

L'écrou suivant le brevet US-A-3.851.541 permet un réglage des deux tronçons d'écrou sans démontage, c'est-à-dire sans dévissage de l'écrou, mais les deux tronçons d'écrou sont ici immobilisés angulairement l'un par rapport à l'autre par une bague interne présentant deux rangées d'échancrures. Chaque tronçon d'écrou présente une ou plusieurs vis radiales destinées à coopérer avec les échancrures d'une rangée de la bague. Ce réglage non seulement n'est pas continu donc peu précis, mais est également très délicat à réaliser du fait que les échancrures de la bague interne sont difficilement visibles de l'extérieur ce qui est pourtant nécessaire pour permettre l'enfoncement des vis dans les échancrures.

La demande de brevet allemand 2 328 910 révèle, entre autres, un mode de réalisation dans lequel un tronçon d'écrou est immobilisé en rotation par rapport à un carter à l'aide d'une clavette, tandis que l'autre tronçon d'écrou est immobilisé angulairement dans le même carter à l'aide d'une bague de serrage et d'un anneau intermédiaire déformable, par exemple en cuivre, qui, lors du serrage de la bague, se trouve enfoncé dans un moletage frontal du tronçon d'écrou et un moletage frontal de la bague de serrage. Cet écrou qui est également relativement encombrant dans le sens radial, du fait de la présence du carter extérieur, permet certes un rattrapage du jeu, mais non pas une précharge de l'écrou. En effet, la préhension de l'écrou pour exercer le couple nécessaire pour obtenir la précharge est rendue difficile, voire problématique, du fait que l'écrou se trouve entièrement noyé dans le carter.

Enfin, le brevet US-A-3.638,507 se rapporte à un dispositif vis-écrou dont l'écrou comporte des moyens d'immobilisation angulaire de deux parties, comprenant, dans une partie, une vis serrant une pastille en un matériau déformable contre une surface de l'autre partie, cette surface étant, soit lisse (figure 3), soit munie d'un filet helicoidal. Cette immobilisation angulaire ne fait intervenir que le frottement entre la pastille et ladite surface.

La présente invention a pour objet un mécanisme à visécrou à roulement qui, tout en étant peu encombrant dans le sens radial et d'une fabrication simple, permet un réglage continu et répété, non seulement du jeu, mais également de la précharge interne, et assure une immobilisation angulaire optimale après réglage.

Le dispositif vis-écrou à roulement conforme à l'invention est du type comprenant un écrou divisé en deux tronçons d'écrou coaxiaux, juxtaposés, portant axialement l'un contre l'autre. Le dispositif comprend également des moyens pour régler et immobiliser les deux tronçons d'écrou dans leur position angulaire réciproque en vue du réglage du jeu ou de la précharge interne. Lesdits moyens comprennent au moins une pastille en un matériau déformable, immobilisée dans le sens circonférentiel du dispositif dans une partie annulaire extérieure de l'un des deux tronçons d'écrou. Cette pastille est serrée par un organe de pression vers l'intérieur contre la surface latérale extérieure, à striures ou cannelures sensiblement parallèles à l'axe du dispositif, d'une partie annulaire intérieure, coaxiale et intérieure à ladite partie annulaire extérieure et solidaire en rotation de l'autre desdits tronçons d'écrou.

Cet agencement procure un ancrage optimal de la pastille par rapport à la partie contre laquelle elle est serrée, dans la direction circonférentielle du dispositif, direction dans laquelle la pastille est sollicitée en cisaillement, d'où une immobilisation angulaire optimale des deux tronçons d'écrou.

Suivant un mode de réalisation ladite partie annulaire intérieure peut faire partie intégrante dudit autre tronçon d'écrou.

Suivant un autre mode de réalisation, ladite partie annulaire intérieure fait partie intégrante d'une bague rigide présentant une autre partie annulaire intérieure. Dans ce cas, au moins une autre pastille en un matériau déformable est immobilisée dans le sens circonférentiel du dispositif dans une partie annulaire extérieure de l'autre tronçon d'écrou. Cette autre pastille est également serrée par un organe de pression vers l'intérieur contre la surface latérale extérieure striée ou cannelée de ladite autre partie annulaire intérieure, coaxiale et intérieure à ladite partie annulaire extérieure dudit autre tronçon d'écrou.

Dans un cas comme dans l'autre, il suffit, pour immobiliser dans leur position angulaire réciproque les deux tronçons d'écrou qui portent frontalement l'un contre l'autre, de serrer chaque pastille par l'organe de pression correspondant contre la surface latérale extérieure de la partie annulaire intérieure associée, de sorte que cette pastille pénètre, en se déformant, dans les striures ou cannelures de cette surface assurant ainsi l'immobilisation de la partie annulaire intérieure par rapport à la partie annulaire extérieure.

En vue de l'immobilisation circonférentielle de chaque pastille dans sa partie annulaire extérieure, il est avantageux que chaque pastille soit disposée dans un trou radial de la partie annulaire en question.

Pour faciliter son extraction du trou radial de la partie annulaire extérieure, il est avantageux que chaque pastille soit déformable au moins en partie élastiquement et présente, avant le serrage, un diamètre inférieur au diamètre dudit trou radial.

Ainsi, lors du serrage, la pastille se dilate dans le sens radial, remplissant ainsi toute la section du trou radial, mais lors du desserrage, la pastille se contracte de nouveau suffisamment pour ne pas rester accrochées dans le trou.

Divers matériaux peuvent être envisagés pour la réalisation des pastilles. En dehors de métaux déformables, des matières plastiques telles que le polyuréthane ou le polyamide présentent les caractéristiques requisent.

Afin d'assurer le centrage des deux tronçons d'écrou et d'éviter, lors du serrage des pastilles, que ces dernières se dilatent de façon excessive entre la surface latérale intérieure de la ou des parties annulaires extérieures et la surface latérale extérieure rugueuse de la ou des parties annulaires intérieures, il est avantageux que lesdites surfaces soient ajustées.

De préférence, les organes de pression sont constitués par des vis prolongées par un téton non fileté et engagées dans des trous radiaux qui sont taraudés dans leur partie extérieure, mais lisses dans leur partie intérieure. Ainsi, les pastilles lors de leur serrage, ne peuvent pas pénétrer dans les filets des trous et s'y accrocher, gênant ainsi leur enlèvement subséquent.

En se référant au dessin annexé, on va décrire ci-après plus en détail deux modes de réalisation illustratifs et non limitatifs de l'objet de l'invention; sur les dessins:

la fig. 1 est une vue en élévation latérale, partiellement en coupe, d'un dispositif à vis-écrou conforme à l'invention;

les fig. 2 et 3 sont des coupes partielles suivant II-II de la fig 1, avant serrage et après serrage d'une pastille;

la fig. 4 est une vue sur la fig. 1 d'un autre mode de réalisation.

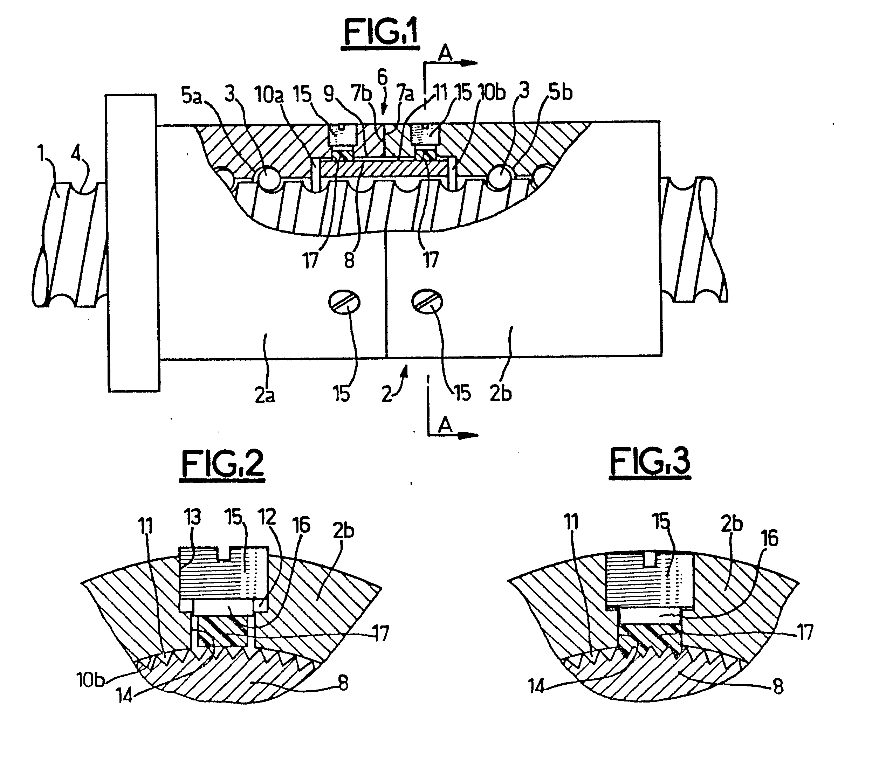

Le dispositif vis-écrou illustré par la fig. 1 est du type à circulation de billes et comprend une vis 1, un écrou 2 composé de deux tronçons d'écrou 2a, 2b coaxiaux, juxtaposés et des billes 3. La vis 1 présente extérieurememt un chemin de roulement hélicoïdal 4 continu pour les billes 3. Chaque tronçon d'écrou 2a, 2b présente intérieurement un chemin de roulement hélicoïdal 5a, 5b dont les deux extrémités sont reliées entre elles par une conduite non représentée pour le retour des billes.

Les chemins de roulement 4 et 5a, 5b présentent un profil sensiblement semi-circulaire, le rayon de ces chemins de roulement étant supérieur au rayon des billes 3.

Pour compenser le jeu entre les billes 3 et les chemins de roulement 4, 5a, 5b et/ou pour établir une précharge de billes 3, l'écrou 2 comporte un dispositif référencé 6 dans son ensemble pour le réglage et l'immobilisation angulaire des deux tronçons d'écrou 2a, 2b l'un par rapport à l'autre.

Le dispositif 6 situé dans la zone où les deux tronçons d'écrou 2a, 2b portent axialement l'un contre l'autre par leur face frontale rectifiée 7a, 7b comprend une bague 8 rigide, par exemple en acier, logée dans des chambrages 9a, 9b que présentent les deux tronçons d'écrou 2a, 2b dans leurs extrémités contiguës. La bague 8 qui entoure à distance la vis 1 présente, dans sa surface latérale extérieure 9 ajustée dans les chambrages 10a et 10b, des stries ou cannelures axiales 11 formant un moletage ou une denture, de préférence sur toute la longueur axiale de la bague 8. Comme représenté sur les fig. 2 et 3, les cannelures 11 et les dents entre les cannelures successives peuvent avantageusement présenter un profil triangulaire.

Chaque tronçon d'écrou 2a, 2b présente, dans sa partie entourant le chambrage 10a, 10b, plusieurs trous de passage radiaux 12 dont la partie extérieure 13 est taraudée, tandis que la partie intérieure 14 est lisse. De préférence, le nombre des trous 12 de chaque tronçon d'écrou 2a, 2b est égal à au moins trois, les trous 12 étant répartis uniformément sur le pourtour.

Chaque trou radial 12 est destiné à recevoir une vis de pression 15 prolongée par un téton non fileté 16 pénétrant dans la partie lisse 14 du trou 12 lorsque la vis 15 est vissée à fond dans la partie taraudée 13 du trou 12.

Dans chaque trou 12 est insérée, avant l'engagement de la vis 15, une pastille cylindrique 17 ayant un diamètre inférieur au diamètre de la partie lisse 14 du trou 12. L'épaisseur (axiale) de la pastille 17 est sensiblement égale à la longueur de la partie lisse 14 du trou 12. Les pastilles 17 sont en un matériau déformable, de préférence un matériau déformable au moins en partie élastiquement, tel que le polyuréthane ou le polyamide. Comme le montre la fig. 3, la pastille 17 introduite dans le trou 12 se trouve, lors du serrage de la vis de pression 17, comprimée entre l'extrémité libre du téton 16 de la vis 15 et la surface latérale extérieure 9 de la bague 8 de manière que la pastille 17 se déforme pour pénêtrer dans les cannelures 11 et épouser la forme des cannelures et des dents. En même temps, la pastille 17 se dilate radialement jusqu'à remplir complétement la section de la partie lisse 14 du trou 12. Cela assure une immobilisation angulaire parfaite de la bague 8 par rapport à l'un et à l'autre des deux tronçons d'écrou 2a et 2b donc une immobilisation angulaire des deux tronçons 2a et 2b l'un par rapport à l'autre.

Pour le réglage du jeu interne ou de la précharge interne du dispositif vis-écrou et pour l'immobilisation des deux tronçons d'écrou 2a, 2b dans leur position angulaire réciproque correspondant à ce réglage, il suffit, après avoir serré et déformé de la manière visible sur la fig. 3 les pastilles 17 de l'un des deux tronçons d'écrou 2a, 2b par serrage des vis de pression 15 correspondantes, de manière à immobiliser la bague 8 par rapport audit tronçon d'écrou, et après avoir enfoncé les vis 15 de l'autre tronçon d'écrou de manière que les pastilles 17 ne soient pas encore serrées contre la surface latérale extérieure 9 de la bague 8, d'amener les deux tronçons d'écrou dans leur position angulaire réciproque recherchée et de serrer également les vis 15 de l'autre tronçon d'écrou pour déformer les pastilles 17 de ce dernier de la manière visible sur la fig. 3 et immobiliser ainsi également l'autre tronçon d'écrou par rapport à la bague 8.

Pour modifier le réglage, par exemple pour compenser l'usure du dispositif vis-écrou, on desserre les vis 15 de l'un des tronçons d'écrou, de manière que les pastilles 17 correspondantes se contractent de nouveau. Il est alors possible, soit de préférence de retirer les pastilles 17 et de les remplacer par des pastilles neuves, après avoir dégagé complétement les vis 15, soit éventuellement de réutiliser les pastilles 17. Cependant, du fait que les pastilles 17 ont adopté au moins en partie le profil des cannelures 11 et des dents lors du serrage dans la position de réglage précédente, le contact des pastilles 17 réutilisées avec les cannelures 11 et dents, lors du serrage dans la position correspondant au nouveau réglage, risque de ne pas être aussi bon que lors du premier serrage.

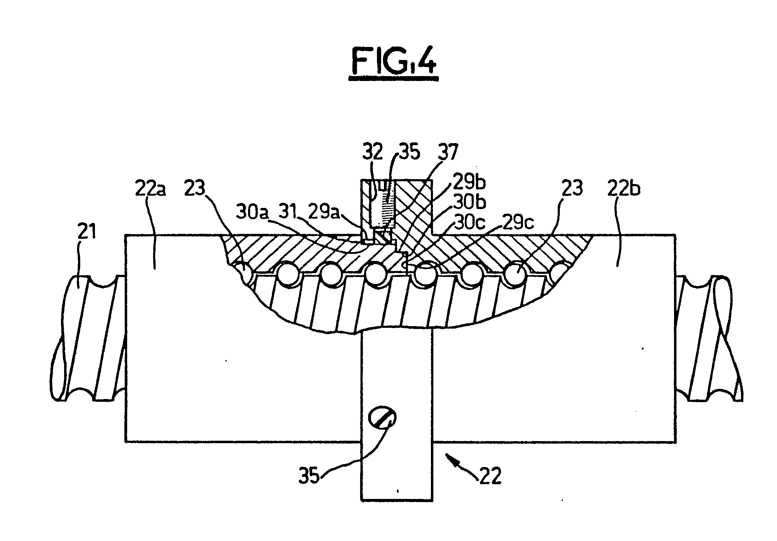

La fig. 4 illustre une variante du dispositif vis-écrou à roulement conforme à l'invention. Dans cette variante, les deux tronçons d'écrou 22a, 22b formant ensemble un écrou 22 coopérant avec une vis 21 par l'intermédiaire de billes 23 présentent l'un un chambrage étagé 30a, 30b et l'autre un prolongement étagé 29a, 29b correspondant, la face d'extrémité 29c du prolongement 29a, 29b portant axialement contre le fond 30c du chambrage 30a, 30b. Les surfaces 29b et 30b sont ajustées pour assurer un centrage évitant les risques d'excentration entre les deux tronçons d'écrou 22a, 22b, tandis que la surface 29a du tronçon d'écrou 22a présente des cannelures ou striures 31.

Plusieurs vis de pression 35 réparties uniformément sur le pourtour sont engagées dans plusieurs trous 32 du tronçon d'écrou 22b de manière à comprimer plusieurs pastilles déformables 37 contre la surface 28a cannelée ou striée du chambrage du tronçon d'écrou 22a. Ces pastilles 37 et les vis 35 sont en tout point comparables aux pastilles 17 et aux vis 15 du mode de réalisation des fig, 1 à 3.

Il apparaît que dans les deux modes de réalisation décrits ci-dessus et représentés sur le dessin annexé, le dispositif vis-écrou à roulement suivant l'invention permet d'une manière simple non seulement un réglage du jeu interne, mais également un réglage de la précharge interne du dispositif, gràce au fait que les deux tronçons d'écrou sont accessibles de l'extérieur et peuvent être maintenus de façon aisée dans leur position angulaire réciproque pendant le serrage des vis de pression, Le dispositif permet un réglage continu et répété, n'impliquant ni démontage, ni dévissage de l'écrou par rapport à la vis.

Bien que l'invention ait été décrite ci-dessus et représentée dans son application à un dispositif vis-écrou à circulation de billes, elle est applicable de la même manière à des dispositifs vis-écrous à circulation de rouleaux ou à rouleaux satellites bien connus par l'homme de l'art.

## Revendications

1. Dispositif vis-écrou à roulement du type comprenant un écrou divisé en deux tronçons d'écrou coaxiaux, juxtaposés, portant axialement l'un contre l'autre, et des moyens pour régler et immobiliser les deux tronçons d'écrou dans leur position angulaire réciproque, en vue du réglage du jeu ou de la précharge interne, caractérisé par le fait que lesdits moyens comprennent au moins une pastille (17 ou 37) en un matériau déformable, immobilisée dans le sens circonférentiel dans une partie annulaire extérieure de l'un desdits tronçons d'écrou (2a, 2b ou 22a, 22b) et serrée par un organe de pression (15 ou 35) vers l'intérieur contre la surface latérale extérieure (9 ou 29a), à striures ou cannelures (11 ou 32) sensiblement parallèles à l'axe du dispositif, d'une partie annulaire intérieure, coaxiale et intérieure à ladite partie extérieure et solidaire en rotation de l'autre desdits tronçons d'écrou (2b, 2a ou 22b, 22a).

2. Dispositif suivant la revendication 1, caractérisé par le fait que ladite partie annulaire intérieure fait partie intégrante dudit autre tronçon d'écrou.

3. Dispositif suivant la revendication 1, caractérisé par le fait que ladite partie annulaire intérieure fait partie intégrante d'une bague rigide (8) présentant une autre partie annulaire intérieure et qu'au moins une autre pastille (17 ou 37) en un matériau déformable est immobilisée dans une partie annulaire extérieure de l'autre desdits tronçons d'écrou et serrée par un organe de pression (15 ou 35) vers l'intérieur contre la surface latérale extérieur striée ou cannelée de ladite autre partie annulaire intérieure, coaxiale et intérieure à ladite partie annulaire extérieure dudit autre tronçon d'écrou.

4. Dispositif suivant l'une quelconque des revendications precédentes, caractérisé par le fait que chaque pastille est disposée dans un trou radial (12 ou 32) de ladite partie annulaire extérieure.

5. Dispositif suivant la revendication 4, caractérisé par le fait que ladite pastille (17 ou 37) est déformable au moins en partie élastiquement et présente avant serrage dudit organe de pression, un diamètre inférieur au diamètre dudit trou (12 ou 32).

6. Dispositif suivant la revendication 5, caractérisé par le fait que ledit organe de pression est une vis (15 ou 35).

7. Dispositif suivant les revendications 5 et 6, caractérisé par le fait que ledit trou (12 ou 32) présente une partie extérieure (13) taraudée et une partie intérieure (14) lisse et que ladite vis (15 ou 35) est prolongées par un téton non fileté (16).

8. Dispositif suivant l'une quelconque des revendications précédentes, caractérisé par le fait que la surface latérale extérieure (9 ou 29b) de ladite ou desdites parties annulaires intérieures est ajustée dans ladite ou lesdites parties annulaires extérieures des tronçons d'écrou.

## Patentansprüche

1. Wälzschraubtrieb mit einer in zwei nebeneinanderliegende koaxial axial aneinanderliegende Mutterabschnitte unterteilte Mutter und mit Mitteln, um die beiden Mutterabschnitte in ihrer gegenseitigen Winkellage einzustellen und festzustellen zwecks Einstellung des Spiels bzw. der inneren Vorspannung, dadurch gekennzeichnet, daß diese genannten Mittel wenigstens eine Tablette (17 bzw. 37) aus einem verformbaren Material umfassen, die in einem äusseren Ringteil eines dieser Mutterabschnitte (2a, 2b bzw. 22a, 22b) in Umfangsrichtung festgelegt ist und durch ein Druckelement (15 bzw. 35) nach innen gegen die äussere mit im wesentlichen parallel zur Achse des Schraubtriebes verlaufenden Riffeln oder Rillen versehene Mantelfläche (9 bzw. 29a) eines zu dem genannten äusseren Teil koaxialen innerhalb diesem liegenden und mit dem anderen der Mutterabschnitte (2a, 2b bzw. 22b, 22a) drehfest verbundenen inneren Ringteils gepresst wird.

2. Vorrichtung gemäß Anspruch 1, dadurch gekennzeichnet, daß der genannte innere Ringteil Bestandteil des genannten anderen Mutterabschnittes ist.

3. Vorrichtung gemäß Anspruch 1, dadurch gekennzeichnet, daß der genannte innere Ringteil Bestandteil eines steifen Rings (8) ist, der einen anderen inneren Ringteil aufweist und dan wenigstens eine andere Tablette (17 bzw. 37) aus verformbarem Material in einem äusseren Ringteil des genannten anderen Mutterabschnittes festgelegt ist und durch ein Druckelement (15 bzw.35) nach innen gegen die äussere geriffelte genannten äusseren Teil koaxialen innerhalb diesem liegenden inneren Ringteil des anderen Mutterabschnittes gepresst wird.

4. Vorrichtung gemäß einem beliebigen der vorhergehenden Ansprüche, dadurch gekennzeichnet, daß jede Tablette in einer radialen Bohrung (12 bzw. 32) des genannten äusseren Ringteils angeordnet ist.

5. Vorrichtung gemäß Anspruch 4, dadurch gekennzeichnet, daß die genannte Tablette (17 bzw. 37) mindestens teilweise elastisch verformbar ist und vor dem Zusammenpressen durch das genannte Druckelement einen Durchmesser aufweist, der kleiner ist als der Durchmesser der genannten Bohrung (12 bzw. 32).

6. Vorrichtung gemäß Anspruch 5, dadurch gekennzeichnet, daß das genannte Druckelement eine Schraube (15 bzw. 35) ist.

7. Vorrichtung gemäß den Ansprüchen 5 und 6, dadurch gekennzeichnet, daß die genannte Bohrung (12 bzw. 32) einen Aussenteil (13) mit Gewinde und einen glatten Innenteil (14) aufweist, und daß die genannte Schraube (15 bzw. 35) durch einen nicht mit Gewinde versehenen Zapfen (18) verlängert wird.

8. Vorrichtung gemäß einem beliebigen der vorhergehenden Ansprüche, dadurch gekennzeichnet, daß die äussere Mantelfläche (9 bzw. 29b) des bzw. der genannten inneren Ringteile in dem bzw. den genannten äusseren Ringteil(en) der genannten Mutterabschnitte eingepasst ist.

## Claims

1. Rolling screw-nut assembly of the type comprising a nut divided into two juxtaposed coaxial nut portions bearing axially one against the other, and means for adjusting and securing the two nut portions in their reciprocal angular positions, for the purpose of adjusting internal play or preload, characterized by the fact that said means comprise at least one plug (17 or 37) of a deformable material, which is held fast in the circumferential direction in an external annular part of one of said nut portions (2a, 2b or 22a, 22b) and clamped by a pressure member (15 or 35) inwardly against the outer diameter surface (9 or 29a), provided with grooves or channels (11 or 32) substantially parallel to the axis of the assembly, of an inner annular part located coaxially to and inside said external part and fixed for rotation with the other of said nut portions (2b, 2a or 22b, 22a).

2. Assembly according to Claim 1, characterized by the fact that said inner annular part forms an integral part of said other nut portion.

3. Assembly according to Claim 1, characterized by the fact that said inner annular part forms is integral with a rigid ring (8) having another inner annular part, and that at least one other plug (17 or 37) of a deformable material is held fast in an outer annular part of the other of said nut portions and is clamped by a pressure member (15 or 35) inwardly against the grooved or channelled outer diameter surface of said other inner annular part located coaxially to and inside said outer annular part of said other nut portion.

4. Assembly according to any one of the preceding claims, characterized by the fact that each plug is disposed in a radial hole (12 or 32) in said outer annular part.

5. Assembly according to Claim 4, characterized by the the fact that said plug (17 or 37) is at least partly elastically deformable and before the tightening of said pressure member has a diameter smaller than the diameter of said hole (12 or 32).

6. Assembly according to Claim 5, characterized by the fact that said pressure member is a screw (15 or 35).

7. Assembly according to Claims 5 and 6, characterized by the fact that the said hole (12 or 32) has a tapped outer part (13) and a smooth inner part (14), and that said screw (15 or 35) is extended by a non-threaded tip (16).

8. Assembly according to any one of the preceding claims, characterized by the fact that the outer diameter surface (9 or 29b) of said inner annular part or parts is fitted into said outer annular part or parts of the nut portions.

## FIG.1

## FIG.2

## FIG.3

# FIG.4

0 095 059